# EUROPÄISCHE PATENTSCHRIFT

(11) **EP 2 404 815 B1**
(45) Veröffentlichungstag und Bekanntmachung des Hinweises auf die Patenterteilung: **30.04.2014**
(21) Anmeldenummer: 11005551.4
(22) Anmeldetag: 06.07.2011
(51) Int. Cl.: B62D 25/24

(54) **Dichtelement**
Seal element
Elément d'étanchéité

(30) Priorität: 09.07.2010 FR 1055609
(43) Veröffentlichungstag der Anmeldung: 11.01.2012
(73) Patentinhaber: TRW Automotive Electronics & Components GmbH, 78315 Radolfzell (DE)
(72) Erfinder: Allenbach, Estelle, 67350 Niedermodern (FR); Kuhm, Michel, 67340 Ingwiller (FR)
(74) Vertreter: Prinz & Partner

(56) Entgegenhaltungen:
- EP-A1- 0 400 393
- EP-A1- 1 757 848
- DE-A1- 1 952 371
- FR-A1- 2 636 308

## Beschreibung

Die Erfindung betrifft ein Dichtelement zur Abdichtung einer Öffnung in einem Bauteil.

Ein gattungsgemässes Dichtelement ist bereits bekannt, zum Beispiel EP 1 757 848.

Bei der Herstellung von Fahrzeugkarosserien ist es erforderlich, Öffnungen in den Bauteilen abzudichten. Hierzu werden Dichtelemente verwendet, die in die Öffnung in der Karosserie eingesetzt und in dieser mittels geeigneter Befestigungselemente, die in die Öffnung des Bauteils eingreifen, fixiert werden. Die Dichtelemente weisen Halteelemente auf, an denen weitere Bauteile, beispielsweise Verkleidungsteile, befestigt werden können. Die Dichtelemente sind daher starken mechanischen Beanspruchungen ausgesetzt, beispielsweise verursacht durch starke Schwingungen oder Vibrationen. Auch bei diesen Beanspruchungen muss eine zuverlässige Abdichtung der Öffnungen sowohl von außen als auch von innen sichergestellt sein.

Aufgabe der Erfindung ist es, ein Dichtelement bereitzustellen, das auch bei im Automobilbereich auftretenden Belastungen eine zuverlässige Dichtigkeit der Öffnungen in beide Richtungen gewährleistet.

Zur Lösung dieser Aufgabe ist ein Dichtungselement zur Abdichtung einer Öffnung in einem Bauteil vorgesehen, mit einem Grundkörper, der in einer Öffnung eines Bauteils befestigt werden kann, und mit einem am Grundkörper angebrachten Dichtungselement, das eine äußere umlaufende Dichtlippe und eine innere umlaufende Dichtlippe aufweist. An der äußeren Dichtlippe ist eine dritte Dichtlippe so angeordnet, dass sie zwischen der inneren und der äußeren Dichtlippe liegt. In eingebautem Zustand in der Öffnung des Bauteils wird die zusätzliche dritte Dichtlippe durch die äußere Dichtlippe gestützt, sodass diese zusätzlich zur äußeren Dichtlippe eine erhöhte Dichtigkeit des Dichtelements ermöglicht.

Die äußere Dichtlippe dichtet das Bauteil vorzugsweise nach außen ab, verhindert also ein Eindringen von Schmutz oder Wasser von außen in das Innere des Bauteils. Der Durchmesser der äußeren Dichtlippe ist dazu vorzugsweise an ihrem freien Ende größer als in der Nähe des Grundkörpers. Die Dichtlippe weitet sich also zu ihrem freien Ende hin konisch auf, sodass sie sich beim Einsetzen des Dichtelements radial nach außen wegdrücken lässt. Die äußere Dichtlippe liegt so unter Vorspannung an der Fläche des Bauteils an und dichtet die Öffnung ab. Wird von außen ein Druck auf das Dichtelement aufgebracht, beispielsweise durch anstehendes Wasser, wird die Dichtlippe durch den senkrecht auf der Oberfläche stehenden Druck gegen das Bauteil gedrückt, sodass die Dichtigkeit des Dichtungselements erhöht wird.

Analog dazu dichtet die innere Dichtlippe das Bauteil nach innen hin ab. Der Durchmesser der inneren Dichtlippe ist dazu vorzugsweise an ihrem freien Ende kleiner als in der Nähe des Grundkörpers. Die innere Dichtlippe verengt sich also zu ihrem freien Ende hin konisch. Beim Einsetzen des Dichtelements in die Öffnung kann die Dichtlippe radial nach innen weggedrückt werden, sodass diese federnd am Bauteil anliegt und bei zunehmendem Druck von innen gegen das Bauteil gedrückt wird. In Verbindung mit der äußeren Dichtlippe ist so eine Abdichtung der Öffnung des Bauteils in beide Richtungen gewährleistet.

Die Wandstärke der äußeren Dichtlippe kann beispielsweise außerhalb der dritten Dichtlippe nach außen hin zunächst konstant sein und verringert sich dann zum freien Ende hin. Der Teil der Dichtlippe mit einer konstanten Wandstärke gewährleistet eine ausreichende Stabilität der äußeren Dichtlippe, sodass diese eine ausreichende Stützkraft gegen das Bauteil aufbringen kann, um die Dichtigkeit des Dichtelements zu gewährleisten. Das freie Ende der äußeren Dichtlippe verjüngt sich dagegen zu seinem Ende hin, wodurch dieses flexibel genug ist, um sich an die Oberfläche des Bauteils anzulegen.

Die Wandstärke der äußeren Dichtlippe zwischen dem Grundkörper und der dritten Dichtlippe ist vorzugsweise ebenfalls konstant und größer als außerhalb der dritten Dichtlippe. Dadurch erhält die äußere Dichtlippe eine ausreichende Stabilität, um auch die dritte Dichtlippe abzustützen.

Die Wandstärke der inneren Dichtlippe verringert sich beispielsweise vom Grundkörper zum freien Ende hin, vorzugsweise kontinuierlich. Das freie Ende der inneren Dichtlippe kann so federnd nachgeben, während die Dichtlippe in der Nähe des Grundkörpers eine ausreichende Stabilität bietet, um die innere Dichtlippe abzustützen.

In einer bevorzugten Ausführungsform endet die dritte Dichtlippe auf einem Niveau, das einen geringeren Abstand vom Grundkörper hat als das Niveau, auf dem die äußere Dichtlippe endet. Das heißt beim Einsetzen des Dichtelements liegt zuerst die äußere Dichtlippe am Bauteil an und wird nach außen verformt. Der an der äußeren Dichtlippe befestigte Ansatz der dritten Dichtlippe wird dabei mit der äußeren Dichtlippe nach außen verformt. Das freie Ende der dritten Dichtlippe wird dagegen nicht verformt, sodass die dritte Dichtlippe eine zu ihrem freien Ende konisch verjüngende Form annimmt. Gelangt beim weiteren Einschieben die dritte Dichtlippe in Anlage mit dem Bauteil wird diese analog zur inneren Dichtlippe nach innen weggebogen, sodass das Dichtelement zwei nach innen gerichtete Dichtlippen aufweist.

Die dritte Dichtlippe kann beispielsweise auf demselben Niveau enden wie die innere Dichtlippe. Das heißt die innere Dichtlippe und die dritte Dichtlippe gelangen beim Einschieben des Dichtelements in die Öffnung gleichzeitig in Anlage mit dem Bauteil.

Die Dichtlippe ist vorzugsweise an den Grundkörper angespritzt, beispielsweise in einem zweistufigen Spritzverfahren. Zum einen ist dadurch die Dichtigkeit zwischen Dichtlippe und Grundkörper gewährleistet. Zum anderen ist so eine einfache Verarbeitung des Dichtelements möglich, da das Dichtelement als ein Bauteil verarbeitet werden kann.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Dichtelements;
- Figur 2 eine Schnittansicht durch das Dichtelement aus Figur 1; und
- Figur 3 eine Schnittansicht durch das Dichtungselement des Dichtelements aus Figur 1.

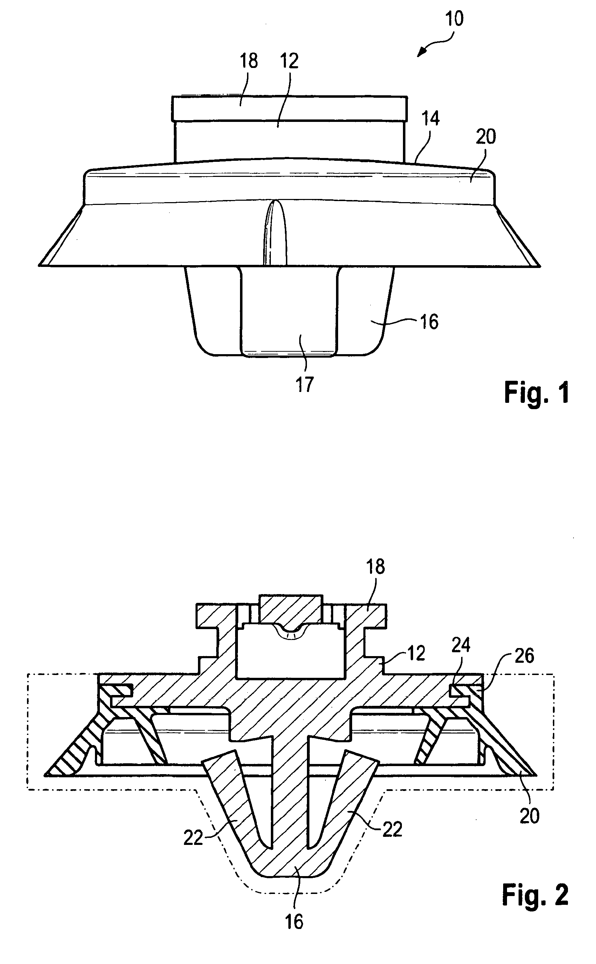

Das in Figur 1 dargestellte Dichtelement 10 dient der Abdichtung einer Öffnung in einem Bauteil, beispielsweise einem Karosseriebauteil. Das Dichtelement 10 hat einen Grundkörper 12, der in der Öffnung des Bauteils befestigt werden kann. Der Grundkörper 12 hat eine im Wesentlichen scheibenartige Grundplatte 14, an der ein Befestigungsvorsprung 16, der hier ein Rastelement 17 aufweist, zur Befestigung des Dichtelements 10 in der Öffnung des Bauteils vorgesehen ist. Auf der gegenüberliegenden Seite der Grundplatte 14 ist ein Halteelement 18 zur Befestigung weiterer Bauteile am Dichtelement 10 vorgesehen. Das Halteelement 18 kann beispielsweise eine Schiene oder ein Rastelement aufweisen, an dem weitere Anbauteile befestigt werden können. An der Grundplatte 14 ist umlaufend ein Dichtungselement 20 vorgesehen, mit dem die Öffnung des Bauteils abgedichtet werden kann.

Das Rastelement 17 weist hier, wie in Figur 2 zu sehen ist, zwei gegenüberliegenden Rasthaken 22 auf, die auf der Rückseite des Bauteils eingreifen können. An der Grundplatte 14 ist umlaufend eine Nut 24 vorgesehen, in die ein ringförmiger Abschnitt 26 des Dichtungselements 20 eingreift.

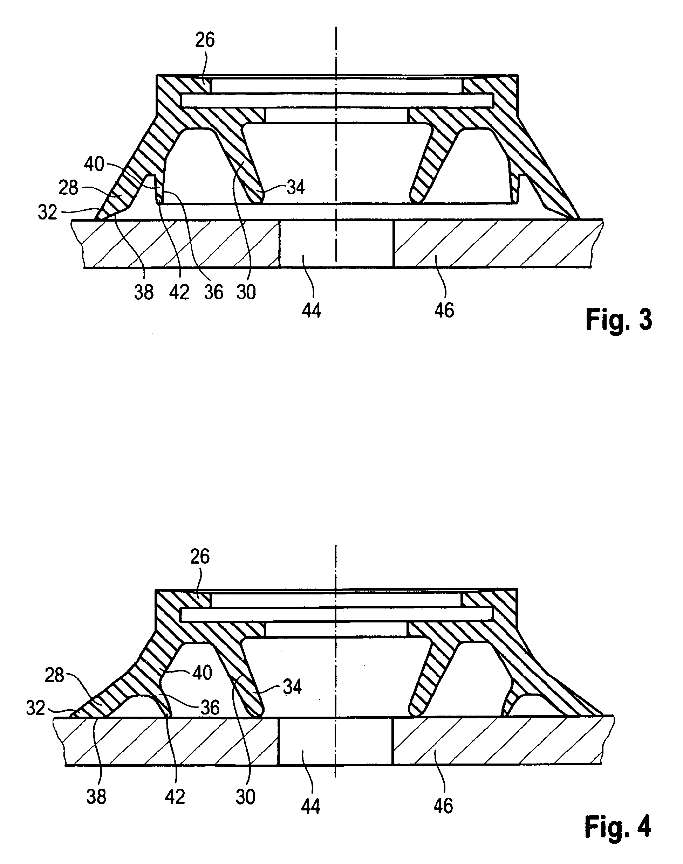

Wie insbesondere in Figur 3 zu sehen ist, weist das Dichtungselement 20 eine umlaufende äußere Dichtlippe 28 sowie eine innere umlaufende Dichtlippe 30 auf. Die äußere Dichtlippe 28 hat an ihrem freien Ende 32 einen größeren Durchmesser als in der Nähe des Grundkörper 12, weitet sich also zu ihrem freien Ende 32 konisch auf. Der Durchmesser der inneren Dichtlippe 30 ist an ihren freien Ende 34 geringer; die innere Dichtlippe 30 ist also zu ihrem freien Ende 34 hin konisch verjüngend ausgebildet.

Auf der Innenseite der äußeren Dichtlippe 28 ist hier eine dritte Dichtlippe 36 vorgesehen. Die dritte Dichtlippe 36 weist eine geringere Wandstärke auf als die äußere und die innere Dichtlippe 28, 30 und endet auf dem gleichen Niveau wie die innere Dichtlippe 30. Das heißt die dritte Dichtlippe 36 und die innere Dichtlippe 30 enden im gleichen Abstand zum Grundkörper 12 bzw. der Grundplatte 14. Die äußere Dichtlippe 28 endet dagegen auf einem Niveau, das einen größeren Abstand von Grundkörper 12 bzw. der Grundplatte 14 hat als das Niveau der inneren Dichtlippe 30 bzw. der dritten Dichtlippe 36, steht also in eine Einschubrichtung R vor der inneren Dichtlippe 30 und der dritten Dichtlippe 36 vor.

Die äußere Dichtlippe 28 weist vom Grundkörper 12 ausgehend bis zum Ansatz der dritten Dichtlippe 36 eine konstante Wandstärke auf. Außerhalb des Ansatzes der dritten Dichtlippe 36 ist die Wandstärke zunächst ebenfalls konstant, aber geringer als die Wandstärke des dem Grundkörper 12 näher liegenden Abschnitts. Zum freien Ende 32 hin verringert sich die Wandstärke der äußeren Dichtlippe 28. Die Wandstärke der inneren Dichtlippe 30 sowie der dritten Dichtlippe 36 verringert sich jeweils zu ihrem freien Ende hin kontinuierlich.

Beim Einsetzen des Dichtelements 10 in die Öffnung 44 eines Bauteils 46 kommt zuerst das freie Ende 32 der äußeren Dichtlippe 28 mit dem Bauteil 46 in Anlage. Beim weiteren Einschieben des Dichtelements 10 wird die äußere Dichtlippe 28 radial nach außen verformt, sodass eine Anlagefläche 38 der äußeren Dichtlippe 28 flächig am Bauteil anliegt (Figur 4).

Der an der äußeren Dichtlippe befestigte Ansatz 40 der dritten Dichtlippe wird dabei mit der äußeren Dichtlippe 28 nach außen verformt, während das freie Ende 42 der dritten Dichtlippe 36 unverformt bleibt. Die dritte Dichtlippe 36 nimmt also eine zu ihrem freien Ende 42 konisch verjüngende Form an.

Beim weiteren Einschieben des Dichtelements 10 kommen die innere Dichtlippe 30 sowie die dritte Dichtlippe 36, da diese auf dem gleichen Niveau enden, gleichzeitig mit dem Bauteil 46 in Anlage. Aufgrund der konisch verjüngenden Form werden sowohl die innere Dichtlippe 30 mit ihrem freien Ende 34 als auch die dritte Dichtlippe 36 mit ihrem freien Ende 42 radial nach innen verformt.

In montiertem Zustand des Dichtelements 10 liegen somit zwei konisch nach innen verformte Dichtlippen 30, 36 am Bauteil 46 an, sowie eine konisch nach außen aufgeweitete Dichtlippe 30. Die äußere Dichtlippe 28 dichtet die Öffnung 44 nach außen hin ab, verhindern also ein Eindringen von beispielsweise Schmutz oder Wasser von außen. Die innere Dichtlippe 30 sowie die dritte Dichtlippe 36 dichten die Öffnung des Bauteils dagegen nach innen hin ab. Durch die konische Form der Dichtlippen 28, 30, 36 werden diese beim Ansteigen des Druckes auf der jeweiligen Seite des Bauteils 46 durch den senkrecht auf der Oberfläche der Dichtlippen 28, 30, 36 stehenden Druck gegen das Bauteil 46 gedrückt, wodurch die Dichtigkeit erhöht wird.

Das Dichtungselement 20 ist hier vorzugsweise am Grundkörper 12 des Dichtelements 10 angespritzt, sodass eine stoffschlüssige und formschlüssige Verbindung zwischen Grundkörper 12 und Dichtungselement 20 hergestellt ist, wodurch eine gute Abdichtung zwischen Grundkörper 12 und Dichtungselement 20 gewährleistet ist.

## Patentansprüche

1. Dichtelement (10) zur Abdichtung einer Öffnung in einem Bauteil, mit einem Grundkörper (12), der in einer Öffnung eines Bauteils befestigt werden kann, und mit einem am Grundkörper (12) angebrachten Dichtungselement (20), das eine äußere umlaufende Dichtlippe (28) und eine innere umlaufende Dichtlippe (30) aufweist, **dadurch gekennzeichnet, dass** an der äußeren Dichtlippe (28) eine dritte Dichtlippe (36) so angeordnet ist, dass sie zwischen der inneren Dichtlippe (30) und der äußeren Dichtlippe (28) liegt.

2. Dichtelement nach Anspruch 1, **dadurch gekennzeichnet, dass** der Durchmesser der äußeren Dichtlippe (28) an ihrem freien Ende (32) größer ist als in der Nähe des Grundkörpers (12).

3. Dichtelement nach Anspruch 1 oder 2, **dadurch gekennzeichnet, dass** der Durchmesser der inneren Dichtlippe (30) an ihrem freien Ende (34) kleiner ist als in der Nähe des Grundkörpers (12).

4. Dichtelement nach einem der vorhergehenden Ansprüche, **dadurch gekennzeichnet, dass** die Wandstärke der äußeren Dichtlippe (28), außerhalb der dritten Dichtlippe (36), nach außen hin zunächst konstant ist und sich dann verringert.

5. Dichtelement nach einem der vorhergehenden Ansprüche, **dadurch gekennzeichnet, dass** die Wandstärke der äußeren Dichtlippe (28) zwischen dem Grundkörper (12) und der dritten Dichtlippe (36) konstant ist und größer als außerhalb der dritten Dichtlippe (36).

6. Dichtelement nach einem der vorhergehenden Ansprüche, **dadurch gekennzeichnet, dass** die Wandstärke der inneren Dichtlippe (30) sich vom Grundkörper (12) zum freien Ende (34) hin verringert, vorzugsweise kontinuierlich.

7. Dichtelement nach einem der vorhergehenden Ansprüche, **dadurch gekennzeichnet, dass** die dritte Dichtlippe (36) auf einem Niveau endet, das einen geringeren Abstand vom Grundkörper (12) hat als das Niveau, auf dem die äußere Dichtlippe (28) endet.

8. Dichtelement nach einem der vorhergehenden Ansprüche, **dadurch gekennzeichnet, dass** die dritte Dichtlippe (36) auf demselben Niveau endet wie die innere Dichtlippe (30).

9. Dichtlippe nach einem der vorhergehenden Ansprüche, **dadurch gekennzeichnet, dass** das Dichtungselement (20) an den Grundkörper (12) angespritzt ist.

## Claims

1. A sealing element (10) for sealing an opening in a component, having a base body (12) which is adapted to be fixed in an opening of a component, and a gasket element (20) mounted to the base body (12) and having an outer surrounding sealing lip (28) and an inner surrounding sealing lip (30), **characterized in that** a third sealing lip (36) is arranged on the outer sealing lip (28) so as to be located between the inner sealing lip (30) and the outer sealing lip (28).

2. The sealing element according to claim 1, **characterized in that** the diameter of the outer sealing lip (28) at its free end (32) is larger than in the vicinity of the base body (12).

3. The sealing element according to claim 1 or 2, **characterized in that** the diameter of the inner sealing lip (30) at its free end (34) is smaller than in the vicinity of the base body (12).

4. The sealing element according to any of the preceding claims, **characterized in that** outside the third sealing lip (36), the wall thickness of the outer sealing lip (28) is first constant towards the outside and then diminishes.

5. The sealing element according to any of the preceding claims, **characterized in that** the wall thickness of the outer sealing lip (28) between the base body (12) and the third sealing lip (36) is constant and larger than outside the third sealing lip (36).

6. The sealing element according to any of the preceding claims, **characterized in that** the wall thickness of the inner sealing lip (30) diminishes from the base body (12) towards the free end (34), preferably continuously.

7. The sealing element according to any of the preceding claims, **characterized in that** the third sealing lip (36) ends at a level having a smaller distance from the base body (12) than the level at which the outer sealing lip (28) ends.

8. The sealing element according to any of the preceding claims, **characterized in that** the third sealing lip (36) ends at the same level as the inner sealing lip (30).

9. The sealing element according to any of the preceding claims, **characterized in that** the gasket element (20) is injection-molded with the base body (12).

## Revendications

1. Elément d'étanchéité (10) pour l'étanchement d'un orifice dans un composant, comportant un corps de base (12) qui peut être fixé dans un orifice d'un composant, ainsi qu'un élément d'étanchement (20) qui est monté sur le corps de base (12) et qui présente une lèvre d'étanchéité (28) périphérique extérieure et une lèvre d'étanchéité (30) périphérique intérieure, **caractérisé en ce qu'**une troisième lèvre d'étanchéité (36) est agencée sur la lèvre d'étanchéité (28) extérieure de telle sorte qu'elle se trouve entre la lèvre d'étanchéité (30) intérieure et la lèvre d'étanchéité (28) extérieure.

2. Elément d'étanchéité selon la revendication 1, **caractérisé en ce qu'**à son extrémité libre (32), le diamètre de la lèvre d'étanchéité (28) extérieure est plus grand qu'à proximité du corps de base (12).

3. Elément d'étanchéité selon la revendication 1 ou 2, **caractérisé en ce qu'**à son extrémité libre (34), le diamètre de la lèvre d'étanchéité (30) intérieure est plus petit qu'à proximité du corps de base (12).

4. Elément d'étanchéité selon l'une des revendications précédentes, **caractérisé en ce que** l'épaisseur de paroi de la lèvre d'étanchéité (28) extérieure, à l'extérieur de la troisième lèvre d'étanchéité (36), est d'abord constante et diminue ensuite vers l'extérieur.

5. Elément d'étanchéité selon l'une des revendications précédentes, **caractérisé en ce qu'**entre le corps de base (12) et la troisième lèvre d'étanchéité (36), l'épaisseur de paroi de la lèvre d'étanchéité (28) extérieure est constante et plus forte qu'à l'extérieur de la troisième lèvre d'étanchéité (36).

6. Elément d'étanchéité selon l'une des revendications précédentes, **caractérisé en ce que** l'épaisseur de paroi de la lèvre d'étanchéité (30) intérieure diminue du corps du base (12) vers l'extrémité libre (34), de préférence de façon continue.

7. Elément d'étanchéité selon l'une des revendications précédentes, **caractérisé en ce que** la troisième lèvre d'étanchéité (36) se termine à un niveau qui a une plus faible distance par rapport au corps de base (12) que le niveau auquel se termine la lèvre d'étanchéité (28) extérieure.

8. Elément d'étanchéité selon l'une des revendications précédentes, **caractérisé en ce que** la troisième lèvre d'étanchéité (36) se termine au même niveau que la lèvre d'étanchéité (30) intérieure.

9. Lèvre d'étanchéité selon l'une des revendications précédentes, **caractérisé en ce que** l'élément d'étanchement (20) est moulé par injection sur le corps de base (12).
